# EUROPEAN PATENT APPLICATION

(11) **EP 4 563 536 A1**
(43) Date of publication of application: **04.06.2025**
(21) Application number: 24216078.6
(22) Date of filing: 28.11.2024
(51) Int. Cl.: C02F 1/00, B01D 46/22, B63B 35/32, C02F 11/121, C02F 103/00, C02F 11/00

(54) **METHOD OF FILTERING AND CONCENTRATING THE BIOMASS OF A MIXTURE OF CYANOBACTERIA AND WATER, CONCENTRATOR AND SYSTEM FOR COLLECTING CYANOBACTERIA IN OPEN WATER BODIES**

(30) Priority: 29.11.2023 LT 2023545
(71) Applicant: Gamtos Tyrimu Centras, 08412 Vilnius (LT); UAB "Baltic UAV Services", 21101 Traku raj. Jovariskes (LT)
(72) Inventor: GEDVILAS, Antanas, 21101 Traku raj. (LT); KOREIVIENE, Judita, 08412 Vilnius (LT)
(74) Representative: Draugeliene, Virgina Adolfina

(57) **Abstract**

The invention relates to methods and systems for collecting environmental pollutants from open water bodies, in particular the concentration of a biomass of a cyanobacteria and water mixture. The filtration and concentration of the biomass of the cyanobacteria and water mixture is carried out using a plankton net (3). The proposed concentration method and device allows to obtain dense biomass in a single continuous process. The biomass of the cyanobacteria and water mixture distributed on the plankton net (3) is divided into shorter parts of the biomass by partitions (8) of a biomass pusher which is pushed back and forth within the plankton net (3) until the biomass loses water through the plankton net (3) and reaches the desired concentration. The biomass pusher then pushes off the biomass from the plankton net (3) in repeated movement cycles until all biomass parts between the partitions (8) have successively reached the outlet end of the plankton net (3) and are pushed away from it.

## Description

### Technical field

The invention relates to methods and systems for collecting environmental pollutants from water bodies, and in particular for concentrating the biomass of a cyanobacteria and water mixture.

### Relevant prior art

Dangerous cyanobacteria blooms are a serious environmental problem worldwide. In water bodies affected by eutrophication, scum forming species of cyanobacteria often proliferate and form a dense, concentrated layer on the surface of the water in calm weather. Most of these cyanobacteria are capable of synthesising cyanotoxins, which pose a danger to aquatic organisms and humans. Cyanobacterial scums reduce the diversity and heterogeneity of ecosystems by blocking light to other primary producers, suppressing the development of algae and macrophytes. When the decomposition of cyanobacterial biomass begins, oxygen is depleted, leading to unfavourable living conditions for the biota in the water body, and the cyanotoxins released into the water remain in the ecosystem for a long time, causing dangerous pollution and recreational problems.

The known systems for collecting cyanobacteria from a water body are usually large floating devices that are not suitable for use in shallow waters or fish farms. These devices cannot collect near-coastal scums, where wind-driven biomass often accumulates. The propellers of the powerful motors used for floating devices can harm the fish in the breeding ponds, and the noisy devices can cause stress. Another type of equipment - devices that pump the bloom water to a concentrator on the shore - usually suck up in all organisms, including the good components of the ecosystem, and thus have a negative impact on the ecosystem biodiversity. Chemicals are used in these facilities to concentrate and float the biomass, which has a negative impact on the further use of the biomass to obtain valuable bioproducts.

US Patent US2019/0063027 A1 describes a MOBILE MICROalgae collection device for collecting microalgae from the surface of a water body. The floating device has a device for sucking cyanobacteria biomass from the water surface from a predetermined depth, which is connected to a floating platform from which the mixture of cyanobacteria biomass and water is provided to the biomass pre-separation filter. The filter for thickening and separating the microalgae biomass from the water consists of three different layers, and the biomass is pushed away from the filter on a conveyor belt with the help of rotating blades. In the next step, the biomass filtrate is pumped into another unit where the microalgae biomass is concentrated into solid cakes using a compressed air filter press.

The disadvantage of this harvesting technology is that the concentration of microalgae/cyanobacteria biomass involves a two-stage concentration process - the production of filtride (liquid with thickened liquid microalgae biomass) and the production of dense microalgae cakes. The known system and the method of its realization are complicated, as the concentration system consists of two devices operating on different principles, i.e. the primary concentration takes place in a complex pressure chamber with tree filter systems, and the resulting filtride is additionally fed into a complex filter press with compressed air for drying and concentrate compaction. Various complex pressure filtration systems are used to produce filtrate and cake, which require different materials and a lot of energy to process the biomass. Specialized boats for collecting and transporting the biomass are bulky, which is not suitable for use in small bodies of water.

Chinese patent application No. CN106368195A describes a special boat for collecting cyanobacteria in flowing waters. The collection boat consists of a platform body installed on buoys and a collection tank in between. The boat contains a hydrocyclone centrifuge for concentrating the cyanobacteria by adding the flocculant polyacrylamide as well as a dehydrator, a storage tank for the concentrated biomass, an electrical generator, a control unit and a pump for pumping the biomass. The device works floating or standing in the river, the cyanobacteria are transported into the collection bucket by the current, which ensures the energy efficiency of the device. The angle of inclination of the collection bucket can be adjusted to the thickness of the cyanobacteria layer by pulling the handle.

The disadvantage of the known specialised boat is that the chemical coagulants are used to concentrate the cyanobacteria biomass on the surface and separate it by centrifugation. Centrifugation is one of the most energetically expensive methods of separating biomass and is generally used when the biomass is used for the production of high value-added bioproducts. In this case, the added chemical coagulant contaminates the biomass and restricts its further use to the production of low value-added bioproducts.

In addition, this boat is relatively large and is suitable for working in flowing waters, where the cyanobacteria biomass is transported with the current to the collection bucket, whereby the position of the collection bucket and the thickness of the collected layer are adjusted manually. This system would not work in stagnant waters (lakes, ponds).

Chinese utility model No. CN211395625 describes a mobile biomass harvester for cyanobacteria and describes the method of collecting cyanobacteria biomass on board and processing it for use as organic fertilizer. The ship moves along the coast with the help of rotating paddles attached to the sides. A conveyor belt for transporting cyanobacteria, a device for cleaning the biomass from the conveyor belt and a cyanobacteria pressing device for water separation are installed on the ship's hull.

The mobile cyanobacteria biomass collector described has the following disadvantages: after being collected by a rotating conveyor, the cyanobacteria biomass is additionally concentrated by pressing. This concentration method requires sophisticated presses and a high energy input. The device is large and is not suitable for use in fish ponds, where the large rotating wheels can damage the fish and cause them additional stress.

The closest prior art is the bionic filter system for collecting cyanobacteria, its method of operation and the concentrator used therein, as described in the Chinese utility model description, publication No. CN207822632U. The bionic filter technology mimics the feeding principle of the plankton filter-feeding fish (*Hypophthalmichthys* sp.), which filters the water flowing through the gill plates like a dense sieve system and separates the plankton. The system is designed to collect cyanobacteria colonies in the surface layer of the water. The system consists of a collector and a concentrator. The collector has a collection bucket to suck up water with cyanobacteria biomass from the water surface and a remote control to regulate the immersion depth of the bucket in the water; the pumping system is connected to the concentrator device. The concentrator consists of frames with attached plankton nets for filtering and concentrating the liquid cyanobacteria biomass and a distributor for distributing the sucked biomass on the plankton net. Specifically, the system consists of: a) an intelligent binding system consisting of interconnected flexible bonds to collect the cyanobacterial scums and direct them to the prototype; b) the suction system of the top layer of water, which carefully sucks up the cyanobacteria that have risen to the surface and directs them to the filtration and concentration system; c) frames with plankton nets arranged tightly in rows on the platform and inclined at a certain angle. The angle of inclination of the frame can be adjusted depending on the water flow rate, the cyanobacteria concentration and filtration speed. Water with cyanobacteria is sprayed onto the net via a distributor, where the water is filtered through the net and the cyanobacteria run down the net due to gravity; d) the device for the secondary concentration of cyanobacteria consists of vibrating frames covered with a plankton net, which are arranged horizontally one above the other with a slight inclination.

The operation of this system describes the method of collecting and concentrating cyanobacteria accumulations on the surface of water bodies, which consists of sucking the liquid biomass of cyanobacteria from the water surface with a collector, transporting the biomass pumped into a bucket to the concentrator where the biomass is filtered using a plankton net, and concentrating and transferring the biomass for the next concentration step (compacted biomass) and then transferring it into floating bags for transportation to land.

In this concentration system, the concentrator consists of two devices operating on different principles, which makes the system and its implementation very complex. The primary concentration takes place on inclined frames with plankton nets attached to them, and the resulting cyanobacteria concentrate is transferred to a vibrating horizontal net system for compaction.

### Problem to be solved

The invention aims to simplify the method of filtering and concentrating a biomass of a cyanobacteria and water mixture and the construction of a concentrator implementing it by using one type of concentrator instead of two different devices that allow to increase the efficiency of concentration of the collected cyanobacteria biomass at low energy and time costs without using chemicals for compaction, enabling a wide range of biomass utilisation for various bioproducts, while at the same time making the whole system of cyanobacteria collection and its utilisation cheaper.

### The essence of the invention

According to the proposed invention, there is provided a method for filtering and concentrating a biomass of a cyanobacteria and water mixture using a plankton net, comprising the following steps:
- distributing the biomass of the cyanobacteria and water mixture in a layer of uniform thickness on the plankton net,
- dividing the biomass of the cyanobacteria and water mixture distributed on the plankton net into shorter biomass parts by parallel partitions attached to a biomass pusher and extended transversely the plankton net, so that the biomass parts are located between the respective partitions when the biomass pusher is in the lowered position,
- carrying out of filtering and concentrating of the biomass of the cyanobacteria and water mixture by pushing the biomass pusher forward and backward along the length of the plankton net and at the same time pushing the biomass parts of the cyanobacteria and water mixture forward and backward, wherein during the pushing, the water is filtered through the planktonic net and the biomass is concentrated,
- repeating the pushing of the biomass pusher forward and backward until the desired biomass of the cyanobacteria and water mixture concentration is reached,
- pushing off the biomass parts successive from an outlet end of the plankton net, when the biomass has reached the desired concentration, wherein pushing off is performed by repeating movement cycles of the biomass pusher, wherein one movement cycle of the biomass pusher comprises the following directions: upward, backward, downward, forward, and repeating this cycle until all the biomass parts located between the partitions have reached the outlet end and have been pushed off from the plankton net.

According to the construction embodiment of the proposed invention, there is provided a concentrator for filtering and concentrating a biomass of a cyanobacteria and water mixture, comprising a body with a plankton net mounted inside it and a distributor for distributing the biomass of the cyanobacteria and water mixture on the plankton net for filtering and concentrating of said biomass, wherein
- the body is an open rectangular box at an inlet end of which is arranged a distributor for distributing the biomass of the cyanobacteria and water mixture on the plankton net, and
- an outlet end of the rectangular box is provided with a means for directing a concentrated biomass into a collection container, and the outlet end of the rectangular box has an open part for the discharge of water which has seeped through the plankton net into a selected container or water body,
- the plankton net is arranged horizontally in the rectangular box at a selected distance from a bottom of the rectangular box,
- a biomass pusher is provided which is configured as a frame structure which is mounted in the rectangular box above the plankton net and has partitions extending transversely and perpendicularly to the plankton net, wherein the partitions are fixed to the frame structure of the biomass pusher parallel at equal intervals and wherein the frame structure of the biomass pusher is connected to a linear servomotor capable to provide linear movement of the biomass pusher in directions corresponding to the programmed directions up, down, forward and backward for pushing the biomass parts located between the partitions (8) forward and/or backward along the plankton net within the plankton net, the biomass pusher is configured of performing a process of filtering and concentrating the collected biomass on the plankton net or a process of pushing off a concentrated biomass from the plankton net, depending on the selected programme of linear movements of the biomass pusher.

To a free end of the each partition is attached a tip, which is made of elastic material, the elasticity of which is selected such that the biomass parts located between the partitions can be pushed forward and backward without damaging the plankton net.

The tip is configured such that it's a pushing front part is in the form of a straight plane to ensure uniform forward pushing, while a rear part of the tip is inclined by forming a tip spike and creating a pressing force on the biomass during the backward movement of the tip.

The tips are attached to the partitions with the possibility of replacing it.

The plankton net is installed in a rectangular box with the possibility of replacing it.

According to the proposed invention there is provided a system for collecting and concentrating a biomass of a cyanobacteria and water mixture from the surface of water bodies, comprising a collector and a concentrator, wherein the collector comprises a means for removing the biomass of cyanobacteria and water mixture from the surface of the water body and for transferring the biomass into the concentrator, wherein the concentrator is designed according to any one of claims 1 to 6.

The collector is a remote-controlled device floating in the water and the concentrator is a movable device located on land, the collector and the concentrator being connected to each other by a flexible hose to transfer a collected biomass of cyanobacteria and water mixture to the biomass distributor located at the front end of the concentrator.

### Advantages of the invention

The proposed system is designed to collect cyanobacterial biomass from the surface scums that accumulate near the shores of blooming aquatic ecosystems and whose biomass is often toxic and free of other living organisms. It allows the removal of hazardous components from the ecosystem without affecting other organisms. The mechanical concentrator proposed in the system enables energy-efficient production of highly concentrated biomass of cyanobacteria without the use of chemicals. The proposed method and device for filtering and concentrating the cyanobacteria biomass enables the production of dense biomass in the same process, whereby the biomass of the biomass of a cyanobacteria and water mixture distributed on the plankton net is divided into smaller parts and gradually pushed back and forth, making the biomass denser due to the loss of water through the underlying plankton net. As the biomass is pushed back, the inclined parts of the biomass pusher tips exert additional downward pressure on the biomass, further accelerating water filtration. By repeating this process, a concentration of cyanobacteria biomass of up to 10 % of the dry weight can be achieved. Depending on the intended speed of the concentrator, the required density can be achieved. This enables more cost-effective transportation and easier further processing of the biomass.

### Brief description of the drawings

The invention is explained in more detail with reference to the drawings, which do not limit the scope of the invention and illustrate it:
Fig. 1 shows a general view of the proposed concentrator.
Fig. 2a shows a biomass pusher in its initial position above a biomass layer distributed on a plankton net.
Fig. 2b shows the biomass pusher in its lowered position on the surface of the plankton net, dividing the biomass into shorter parts for pushing the biomass parts forward.
Fig. 2c shows the biomass pusher in a filtration position, when the biomass parts are pushed back.
Fig. 2d shows the biomass pusher in a filtration position, when the biomass parts are pushed forward after a series of repeated forward/backward pushing filtration operations.
Fig. 2e shows the biomass pusher in the raised position and in the pushed back state for preparation for removing concentrated biomass parts from the plankton net.
Fig. 2f shows the biomass pusher in the lowered position in the state for pushing off the concentrated biomass parts from the plankton net.
Fig. 2g and Fig. 2h show the positions of the biomass pusher for successively pushing off the biomass parts located between the partitions at the outlet end from the plankton net.

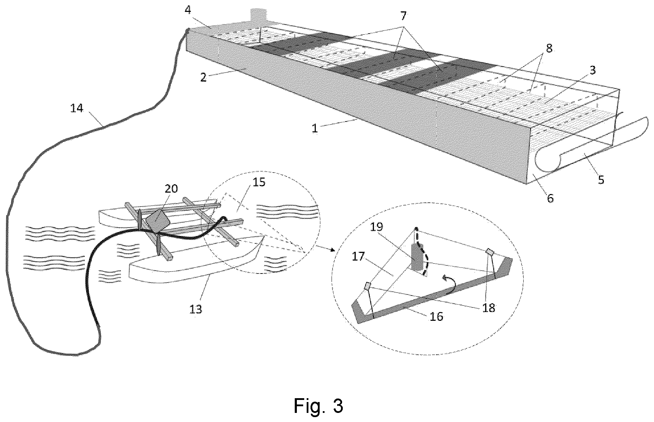

Fig. 3 shows a system for collecting and concentrating a biomass of cyanobacteria and water mixture from the surface of water bodies.

### One of the examples of embodimen of the invention

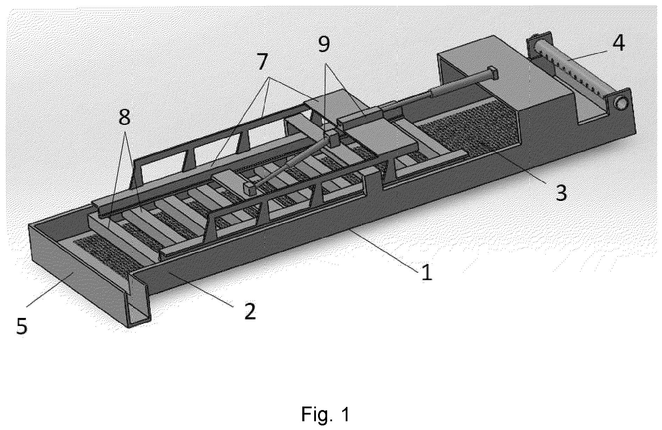

Fig. 1 shows a concentrator 1 for filtering and concentrating a biomass of cyanobacteria and water mixture, which has a body in the form of an open rectangular box 2 in which a plankton net 3 is arranged horizontally at a selected height above the bottom with the possibility of replacement. At the inlet end of the open rectangular box 2 there is a distributor 4 consisting of a perforated plastic tube to distribute the collected biomass of the mixture of cyanobacteria and water into small streams and evenly distribute it on the plankton net 3. At the outlet end 6 of the open rectangular box 2 there is an outlet chute 5 through which the concentrated biomass is discharged into the tank. The chute 5 can be inclined so that the concentrated biomass can flow out by itself. The outlet end 6 of the rectangular box has an open section through which the water that has seeped through the plankton net 3 can be drained and returned to the water body or used for other purposes.

In the open rectangular box 2 of the concentrator 1, a biomass pusher is mounted above the plankton net 3. The biomass pusher has a metal frame structure 7 to which a selected number of parallel partitions 8 at equal intervals 8 are attached, which extend transversely and perpendicularly to the plankton net 3. The frame structure 7 is connected to a linear servomotor 9 which is able to move the biomass pusher linear in the following directions: up, down, forward, backward, according to a predetermined program. Removable tips 10 made of elastic material are attached to the free ends of partitions 8. These tips 10 are elastic enough to allow the biomass located between the partitions 8 to be pushed back and forth without damaging the plankton net. Each tip 10 is designed so that its forward pushing front part 11 has the shape of a straight plane to ensure that the biomass is pushed forward uniformly, and the rear part 12 of the tip 10 is inclined to form a tip with the front part 11. The rear part of the tip 12 is inclined to provide an additional pressure force on the biomass during its backward movement.

The operation of Concentrator 1 comprises the following steps.

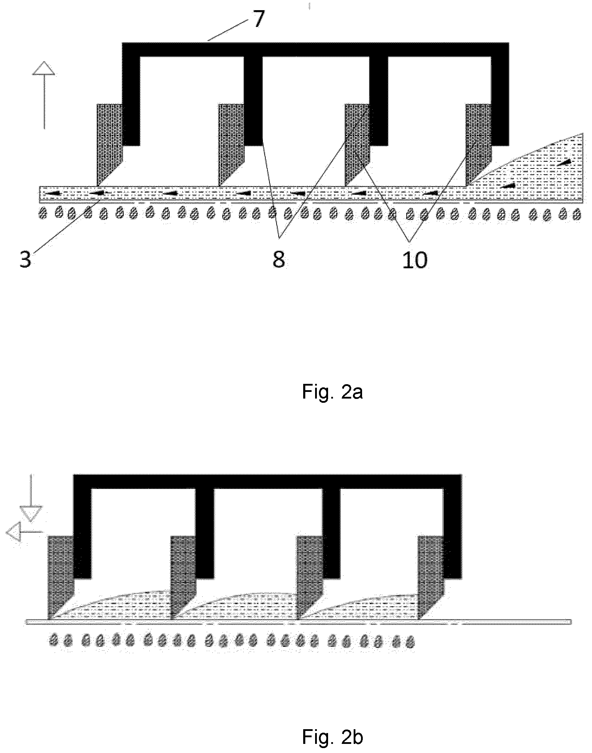

The biomass of cyanobacteria and water mixture is evenly distributed by the distributor 4 in small streams and spread on the surface of the plankton net 3 in a layer of uniform thickness, the thickness of the layer being limited by the height of the partitions 8 of the biomass pusher device with tips 10 arranged above the plankton net 3 (Fig. 2a).

The biomass of mixture of cyanobacteria and water is divided into shorter biomass parts. For this purpose, the biomass pusher is lowered by a linear servomotor 9 until the biomass pusher tips 10 touch the surface of the plankton net 3, whereby the biomass distributed on the plankton net 3 is divided into shorter parts that fall into the gaps between the partitions 8 of the biomass pusher (Fig. 2b).

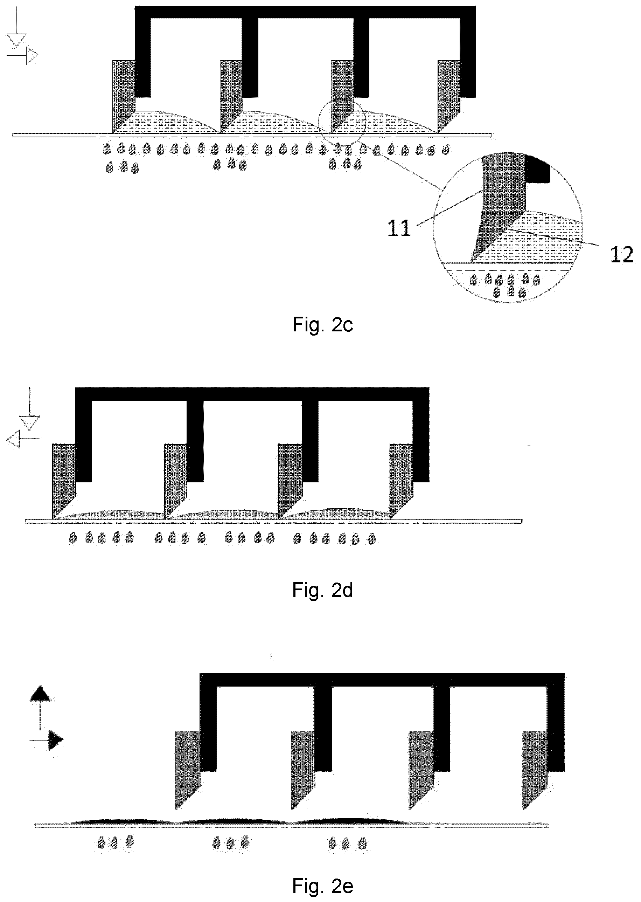

Performs filtration and concentration of the biomass by pushing the biomass pusher back and forth along the plankton net using a linear servomotor 9, while at the same time pushing the biomass parts, located between the partitions 8 on the plankton net 3, back and forth, thereby filtering the water through the plankton net and concentrating the biomass. When the biomass pusher is pushed back, the rear inclined parts 12 of the biomass pusher tips 10 exerts additional pressure on the biomass underneath and accelerates the filtration process (Fig. 2c).

The back-and-forth movement of the biomass pusher is repeated until the desired concentration of biomass is reached (Fig. 2d).

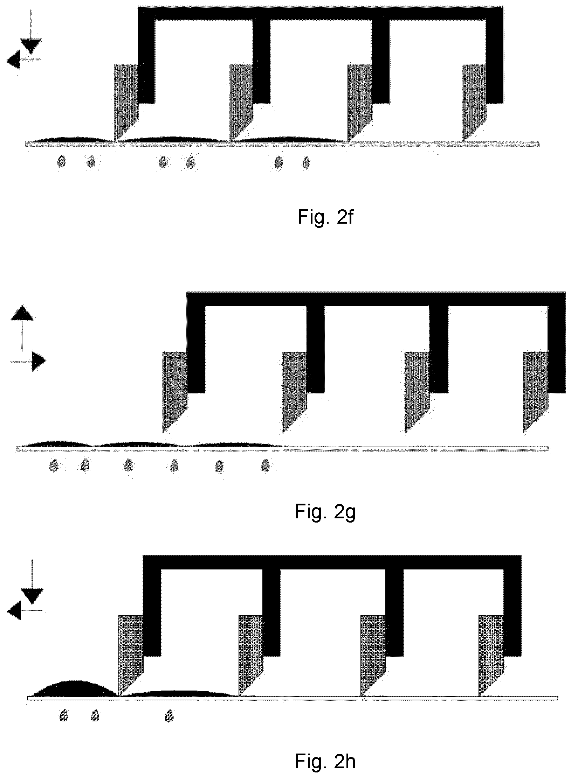

When the desired biomass concentration is reached, the biomass pusher pushes off the biomass from the plankton net 3 in repeated cycles, whereby one movement cycle of the biomass pusher comprises the following directions: upward, backward, downward, forward, pushing the biomass parts located at the exit end of the plankton net, and repeating the same cycle until all parts of the biomass located on the plankton net 3 between the partitions 8 have reached the exit end and have been pushed off from the plankton net (Fig. 2 e-h).

A system for collecting and concentrating a mixture of cyanobacteria biomass and water from aquatic ecosystems, comprising a collector 13 and a concentrator 1 connected by a flexible hose 14. The collector 13 is a mobile floating device consisting of a collection bucket 15 whose front end 16 is flexibly connected to the bucket 17 and is controlled by two servomechanisms 18 on the sides of the bucket, making it possible to change the position of the inclination angle of the front end of the bucket 16 by fixing it in a different inclination position, thereby varying the thickness of the collected layer of cyanobacteria and water. At the opposite end of the bucket 15 is a pump 19, which pumps the water with the cyanobacteria biomass from the bucket 15 to a concentrator 1 located on land via a flexible hose 14.

The proposed collection and concentration system is simple and efficient and allows the collection of cyanobacteria from a selected layer of water, the thickness of which can be changed remotely using a video camera 20 that transmits the image in real time and allows the operator to monitor the change in cyanobacteria scums. The system is powered by connection to the mains or, if no mains power is available, to a generator. The system is easy to transport by placing it on a standard car trailer. The concentrator can also be connected to another type of collector that works on the principle of suction and pumping. The small, lightweight, low-draft collector can be used in shallow waters, in the coastal zone or in fish ponds without harming the fish. It is possible to vary the thickness of the cyanobacteria layer to be collected remotely, ensuring energy efficiency. The concentrator can be placed on a floating platform or other floating vehicle and transported to the shores of larger bodies of water, and the efficiency of the concentrator can be increased by the modular combination of several concentrators.

## Claims

1. A method for filtering and concentrating a biomass of a cyanobacteria and water mixture using a plankton net **characterized by** following steps:
- distributing the biomass of the cyanobacteria and water mixture in a layer of uniform thickness on the plankton net (3),
- dividing the biomass of the cyanobacteria and water mixture distributed on the plankton net (3) into shorter biomass parts by parallel partitions (8) attached to a biomass pusher and extended transversely the plankton net (3), so that the biomass parts are located between the respective partitions (8) when the biomass pusher is in the lowered position,
- carrying out the filtering and concentrating of the biomass of the cyanobacteria and water mixture by pushing the biomass pusher forward and backward along the length of the plankton net (3) and at the same time pushing the biomass parts of the cyanobacteria and water mixture forward and backward, wherein during the pushing, the water is filtered through the planktonic net (3) and the biomass is concentrated,
- repeating the pushing of the biomass pusher forward and backward until the desired biomass of the cyanobacteria and water mixture concentration is reached,
- pushing off the biomass parts successive from an outlet end of the plankton net (3), when the biomass has reached the desired concentration, wherein pushing off is performed by repeating movement cycles of the biomass pusher, wherein one movement cycle of the biomass pusher comprises the following directions: upward, backward, downward, forward, and repeating this cycle until all the biomass parts located between the partitions (8) have reached the outlet end and have been pushed off from the plankton net (3).

2. A concentrator for filtering and concentrating a biomass of a cyanobacteria and water mixture comprising a body with a plankton net mounted inside it and a distributor for distributing the biomass of the cyanobacteria and water mixture on the plankton net (3) for filtering and concentrating of said biomass, **characterised in that**
- the body is an open rectangular box (2) at an inlet end of which is arranged a distributor (4) for distributing the biomass of the cyanobacteria and water mixture on the plankton net (3), and
- an outlet end (6) of the rectangular box (2) is provided with a means (5) for directing a concentrated biomass into a collection container, and the outlet end (6) of the rectangular box (2) has an open part for the discharge of water which has seeped through the plankton net (3) into a selected container or water body,
- the plankton net (3) is arranged horizontally in the rectangular box (2) at a selected distance from a bottom of the rectangular box (2), wherein
- a biomass pusher is provided, which is configured as a frame structure (7) which is mounted in the rectangular box (2) above the plankton net (3) and has partitions (8) extending transversely and perpendicularly to the plankton net (3), wherein
the partitions (8) are fixed to the frame structure (7) of the biomass pusher parallel at equal intervals and wherein the frame structure (7) of the biomass pusher is connected to a linear servomotor (9) capable to provide linear movement of the biomass pusher in directions corresponding to the programmed directions up, down, forward and backward for pushing the biomass parts located between the partitions (8) forward and/or backward along the plankton net (3) within the plankton net (3), the biomass pusher is configured of performing a process of filtering and concentrating the collected biomass on the plankton net (3) or a process of pushing off a concentrated biomass from the plankton net (3), depending on the selected programme of linear movements of the biomass pusher.

3. Concentrator according to claim 2, **characterised in that** to a free end of the each partition (8) is attached a tip 10, which is made of elastic material, the elasticity of which is selected such that the biomass parts located between the partitions (8) can be pushed forward and backward without damaging the plankton net (3).

4. Concentrator according to claim 3, **characterised in that** the tip (10) is configured such that it's a pushing front part is in the form of a straight plane to ensure uniform forward pushing, while a rear part of the tip (10) is inclined by forming a tip spike and creating a pressing force on the biomass during the backward movement of the tip.

5. Concentrator according to any one of claims 3 to 4, **characterised in that** the tips (10) are attached to the partitions (8) with the possibility of replacing it.

6. Concentrator according to any one of claims 1 to 5, **characterised in that** the plankton net (3) is installed in a rectangular box (2) with the possibility of replacing it.

7. A system for collecting and concentrating a biomass of a cyanobacteria and water mixture from the surface of water bodies, comprising a collector and a concentrator (1), wherein the collector comprises a means for removing the biomass of cyanobacteria and water mixture from the surface of the water body and for transferring the biomass into the concentrator (1), **characterised in that** the concentrator (1) is designed according to any one of claims 1 to 6.

8. The system according to claim 7, **characterised in that** the collector is a remote-controlled device (13) floating in the water and the concentrator (1) is a movable device located on land, the collector and the concentrator being connected to each other by a flexible hose to transfer a collected biomass of cyanobacteria and water mixture to a biomass distributor (4) located at the front end of the concentrator (1).
